# EUROPEAN PATENT SPECIFICATION

(11) **EP 1 544 733 B1**
(45) Date of publication and mention of the grant of the patent: **11.04.2007**
(21) Application number: 03028926.8
(22) Date of filing: 17.12.2003
(51) Int. Cl.: G06F 9/46

(54) **Data processing system and method**
Datenverarbeitungssystem und -verfahren
Système et procédé de traitement de données

(43) Date of publication of application: 22.06.2005
(73) Proprietor: SAP AG, 69190 Walldorf (DE)
(72) Inventor: Klein, Markus, 67227 Frankenthal (DE); Roesner, Kai-Michael, 76344 Eggenstein-Leopoldshafen (DE); Wagner, Karl, 68259 Mannheim (DE)
(74) Representative: Richardt, Markus Albert

(56) References cited:
- EP-A- 1 298 525
- US-A- 5 991 802
- US-A- 6 167 517
- US-A1- 2002 161 857
- US-A1- 2003 131 152
- US-B1- 6 182 076

## Description

### Field of the invention

The present invention relates to the field of data processing, and more particularly to providing a return value to an application program.

### Background and prior art

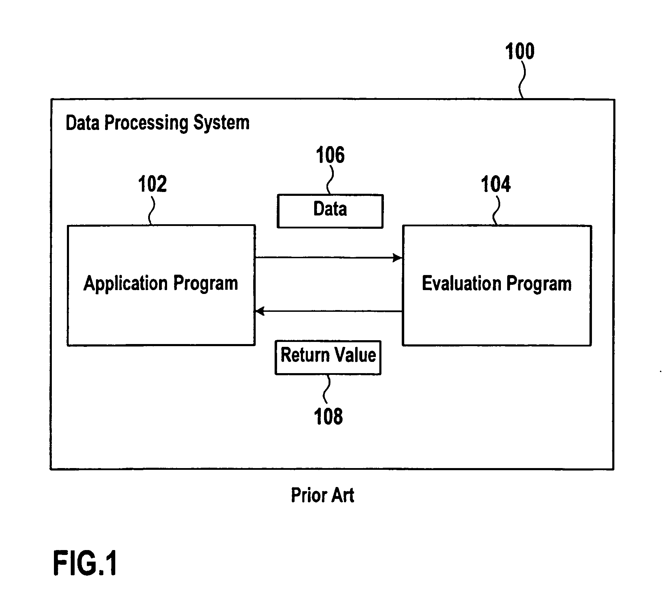

In many data processing systems a calling application program provides data to another program that evaluates the data and provides a return value back to the calling application program. Figure 1 shows a schematic block diagram of the such a prior art data processing system 100.

Data processing system 100 has application program 102 and evaluation program 104. Application program 102 can send function call 106 that contains data to evaluation program 104. This invokes evaluation program 104 that evaluates the data contained in the function call 106 in order to provide a return value 108 back to application program 102.

Application program 102 and evaluation program 104 can be run on the same hardware or on different remote computers. In the latter case a request-response protocol, such as the hypertext transfer protocol (HTTP) can be used. In this case function call 106 is an HTTP request and return value 108 is communicated back from evaluation program 104 to application program 102 as a HTTP response.

Data processing system 100 can have various applications. For example application program 102 receives biometric data (e.g. from a biometric data acquisition module that is coupled to a CCD camera) and a user ID (e.g. form a chip card) and provides the biometric data and user ID to evaluation program 104 by means of function call 106. Evaluation program 104 evaluates the biometric data and calculates a confidence value that the person from which the biometric data has been acquired is in fact the person having the user ID as provided with function call 106. In other words, the return value is a confidence value that indicates the likelihood that the person from which the biometric data is acquired is the same as the person to which the user ID belongs. The confidence value is returned from evaluation program 104 to application program 102 as return value 108.

Another example is that application program 102 provides measurement data to evaluation program 104. For example the measurement data is acquired by sensors or by manual entry from an ongoing process, such as a production process. The measurement data provided to evaluation program 104 by means of function call 106 is evaluated in order to determine an actual status of the ongoing process. The actual status is signalled back to the application program 102 by means of return value 108.

Another example for usage of data processing system 100 is for the purpose of valuation, e.g. cost and/or price determination, of one or a plurality of products. In this instance application program 102 provides data such as product quantity, used materials, services etc. to evaluation program 104 that performs a corresponding valuation. The result of the valuation is returned as return value 108 to application program 102.

A common disadvantage of data processing systems of the type as shown in figure 1 is a lack of flexibility both concerning the evaluation functions performed by the evaluation program and the data that can be considered for performing the evaluation functions. This lack of flexibility is also disadvantageous in terms of the possibility of software reuse. Often there is a one to one relationship of application program and evaluation program as the interface between the application program and the evaluation program is so specific that the evaluation program cannot be used by other application programs. This often results in a duplication of resources as a separate evaluation program is required for similar evaluation tasks. As a consequence inefficient usage of the available data processing resources is made.

US 2003/131152 A1 leverages the combination of the rule-based characteristic of Access Control, where decisions on how to respond to service requests are made at run-time, with both the alternate data sets of Virtual Machines and the alternate service implementation of Functionality Enhancement. This enables flexible alteration of software component behavior according to condition dependent rules. Generally, service requests made by a software components are intercepted. A desired behavior for the software component under the current conditions is determined, based upon rules. The software component is controlled, such that the software component executes the desired behavior and/or manipulates the desired data. The interception may arbitrarily change operation semantics (irrespective of original semantics), including denying the service, performing it on alternate or fake data, or simply leaving it unchanged. Interception may be performed on all service requests in a system, not just on a single interface such as operating system calls. The modification of service semantics is rule based. In one embodiment, a general-purpose engine interprets rules to determine desired semantics modifications. An operation in any service may be independently subject to rules that specify whether or how its semantics are changed. One embodiment has built-in support for both static rules (e.g., fixed by product developers) and dynamic rules (e.g., dependent on runtime variables). Dynamic rules may depend on any previous behavior (runtime variables can be used to summarize execution history), including previous access authorization.

### Summary of the invention

The present invention provides for a data processing system comprising means for receiving a first data object from an application program. The first data object has a plurality of first data fields. Each one of the first data fields has a unique field name. Further the first data object may have data fields with other field names.

When the first data object is received by the data processing system a second data object is generated. Initially the second data object is empty and has a number of data fields with the unique field names as specified in the data processing system. Data is transferred from data fields of the first data object having unique field names to data fields of the second data object having identical unique field names.

Further, a sub-set of the data fields of the second data object is identified in the data processing system. Data that is transferred to data fields of the sub-set is used for selecting one of a plurality of data processing functions stored by the data processing system. The data that is transferred to the second data object is evaluated by means of the selected one of the data processing functions and a resulting value is returned to the application program.

In accordance with a preferred embodiment of the invention the data fields belonging to the sub-set are key fields. The data processing functions are stored in a relational database having the same key fields. When data is transferred from the first data object to the second data object the data entered into the key fields is used for querying the database in order to select one of the data processing functions.

In accordance with a further preferred embodiment of the invention a rule base is used for selecting one of the data processing functions. One or more of the rules of the rule base are applied to the data transferred to the sub-set of data fields of the second data object in order to select one of the data processing functions.

In accordance with a further preferred embodiment of the invention at least one graphical user interface is provided in order to edit the unique field names, modify the sub-set, the data processing functions and/or the rule base.

The present invention is particularly advantageous as it provides a flexible data processing system that can be used by various application programs. Data consistency is provided by the definition of unique field names without further constraints. This semantic flexibility is combined with algorithmic flexibility regarding the data processing functions themselves and the selection logic of the data processing functions. This combination provides both user friendliness, flexibility and the possibility of software reuse. In particular, the data processing system of the invention can be used for various application programs and various communication protocols across different technical platforms.

### Brief description of the drawings

In the following preferred embodiments of the invention will be described in greater detail by making reference to the drawings in which:
- Figure 1: is a block diagram of a prior art data processing system,
- Figure 2: is a block diagram of a first embodiment of a data processing system of the invention,
- Figure 3: is a flow chart illustrating the operation of the data processing system of figure 2,
- Figure 4: is a block diagram of a second preferred embodiment of a data processing system of the invention,
- Figure 5: is a flow chart illustrating operation of the data processing system of figure 4.

### Detailed description

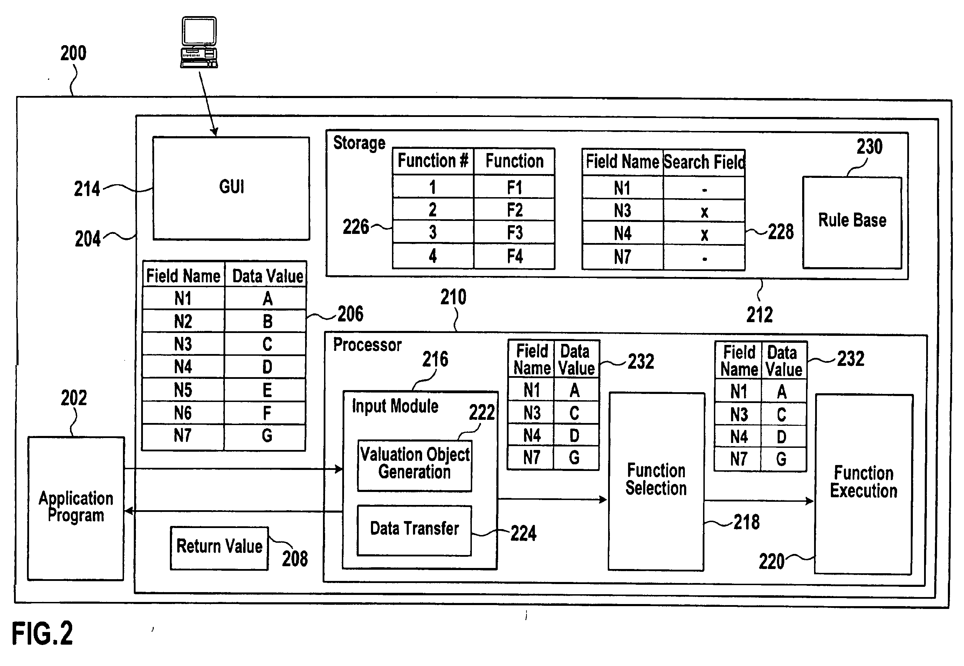

Figure 2 shows data processing system 200 having application program 202 and evaluation module 204. Application program 202 may or may not run on the same physical platform as evaluation module 204. For example, data processing system 200 is a single server computer for running both application program 202 and providing evaluation module 204. Alternatively application program 202 can be executed on a remote computer that communicates with the server computer that provides evaluation module 204 over a network connection.

Evaluation module 204 has processor 210, storage 212 and graphical user interface 214.

Processor 210 serves to execute program modules 216, 218 and 220. Program module 216 serves to receive data object 206 from application program 202. Program module 216 has program module 222 for generating an empty valuation object in response to receipt of data object 206. Further program module 216 has program module 224 for transferring data from data object 206 into the initially empty valuation object.

Program module 218 serves for the purpose of function selection of one of the data processing functions stored in storage 212. Program module 220 serves to execute the data processing function that has been selected by program module 218.

The data processing functions are stored in storage 212. In the example considered here the data processing functions F1, F2, F3 and F4 are stored in table 226. The data processing functions can be entered and edited in table 226 by means of graphical user interface 214.

Further a table 228 is stored in storage 212. Table 228 has a list of unique field names N1, N3, N4, and N7. A sub-set of the unique field names is identified as search fields in table 228, i.e. field names N3 and N4 as shown in figure 2. Data that is transferred into data fields having field names N3 and N4 is used by program module 218 for selection of the data processing function from table 226. This selection is performed by program module 218 by applying one or more rules of rule base 230 to data that is transferred into the search fields N3 and/or N4.

Table 228 and rules of rule base 230 can be entered and/or edited by means of graphical user interface 214.

In operation application program 202 sends data object 206 to evaluation module 204. Data object 206 has a number of data fields N1 to N7 some of which have field names contained in table 228.

In response program module 216 is invoked and program module 222 generates an initially empty valuation object 232 that is used for internal processing within evaluation module 204. Program module 224 transfers data values of data fields having identical field names from data object 206 to valuation object 232. This way valuation object 232 is filled with data values. It is to be noted that the content of valuation object 232 is determined by table 228 in as far as table 228 specifies the unique field names of the data fields of valuation object 232. This semantic definition of the data fields by table 228 is used to transfer data from data object 206 to valuation object 232.

Valuation object 232 is entered into program module 218 that reads the data from the data fields of valuation object 232 that are identified as search fields in table 228. Further program module 218 applies one or more rules of rule base 230 to the data contained in the search fields of valuation object 232 in order to select one of the data processing functions from table 226.

Next valuation object 232 is entered into program module 220 in order to apply the selected data processing function to valuation object 232. The resulting value is returned as return value 208 to application program 202.

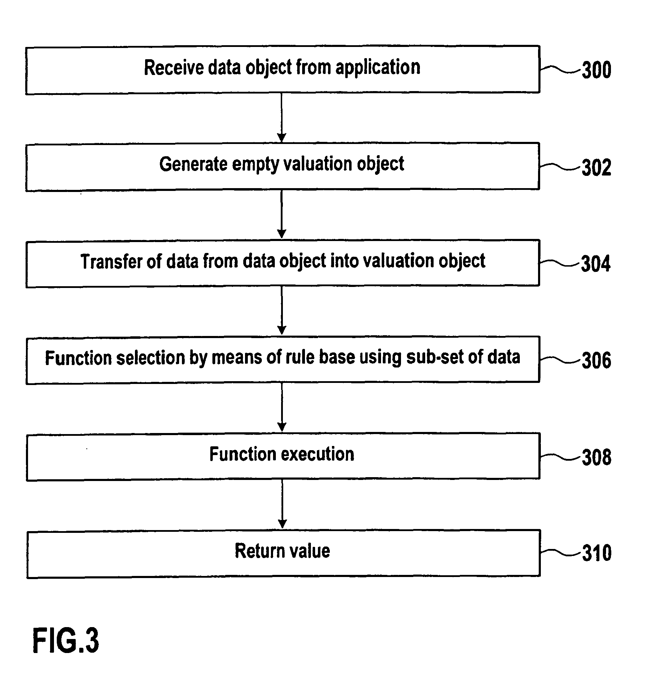

Figure 3 shows a corresponding flow chart. In step 300 a data object is received from an application program. In response an empty valuation object is generated in step 302. The data fields of the valuation object are determined by the unique field names that are stored in the data processing system (cf. table 228). Next the valuation object is filled with data from the data object by transferring of data from data fields of the data object to data fields of the valuation object having identical names (step 304).

In step 306 one of a plurality of data processing functions is selected on the basis of a sub-set of the data that has been transferred into the valuation object. This sub-set is defined by the corresponding entries (cf. entries into: "search field" of table 228 of figure 2). The selected data processing function is executed in step 308 using the data of valuation object 232 as input. The function output is provided as a return value to the application program in step 310.

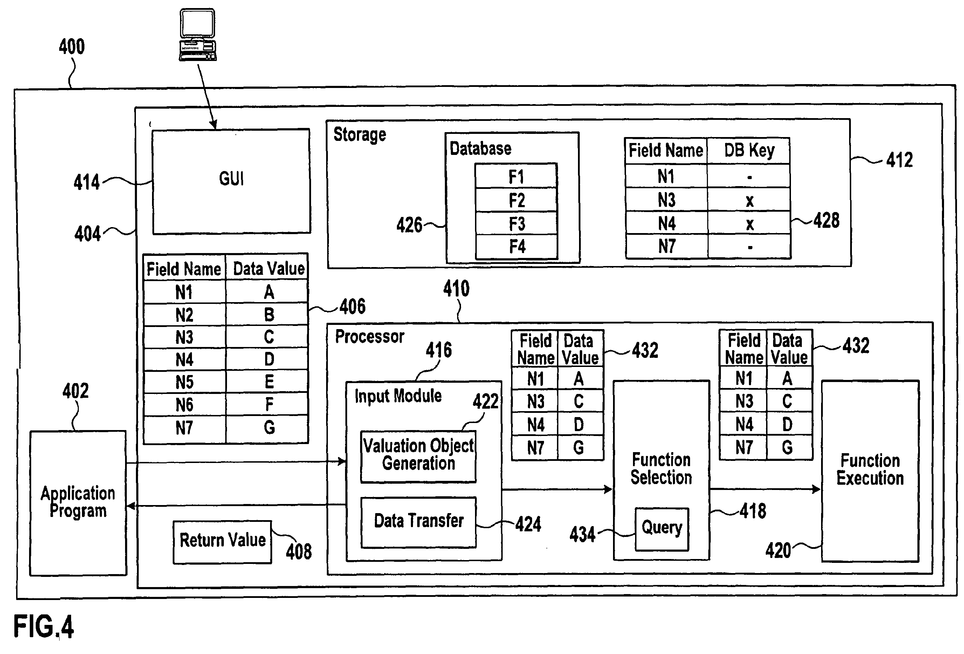

Figure 4 shows an alternative embodiment. Elements of figure 4 that correspond to elements of figure 2 are designated by like reference numerals. In the embodiment of figure 4 the data processing functions F1 to F4 are stored in database 426. Database 426 has database tables with primary keys that are identified in table 428 in row "DB key". Program module 418 has program module 434 for querying database 426.

When program module 418 receives valuation object 432 it uses the data entered into the data fields identified by the entries in row "DB key" as keys for performing a database query. In the example considered here the data values C and D of data fields N3 and N4 are used for querying database 426. The result of the database query is one of the data processing functions F1 to F4 which is executed by program module 420.

It is to be noted that evaluation module can be used by various different application programs. The communication of the application programs with the evaluation module is based on the unique filed names stored in the storage of the data processing system.

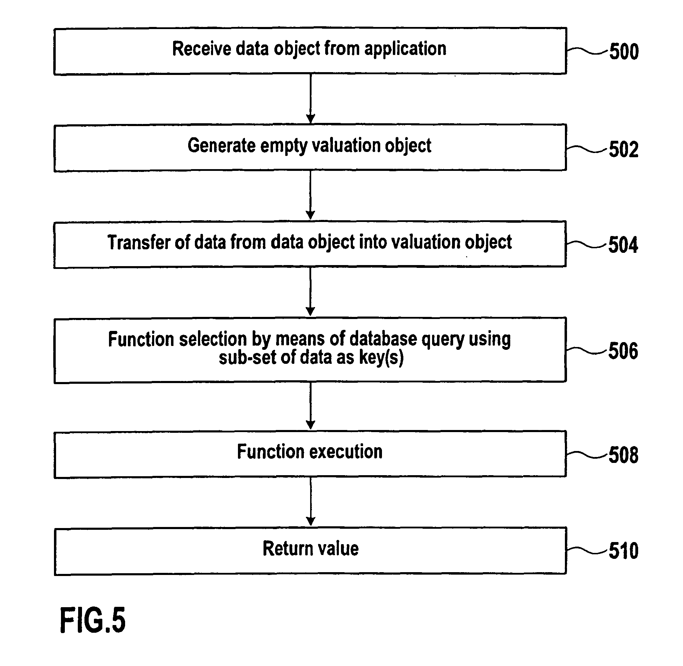

Figure 5 shows the corresponding flow chart. Steps 500 to step 504 corresponds to steps 300 to 304 of the method of figure 3. In step 506 a database query is performed using the sub-set of the data fields identified by table 428 as keys. The data processing function which is thus identified is executed in step 508 and return value is provided back to the application program in step 510.

### List of Reference Numerals

- 100: data processing system
- 102: application program
- 104: evaluation program
- 106: function call
- 108: return value
- 200: data processing system
- 202: application program
- 204: evaluation module
- 206: data object
- 208: return value
- 210: processor
- 212: storage
- 214: graphical user interface
- 216: program module
- 218: program module
- 220: program module
- 222: program module
- 224: program module
- 226: table
- 228: table
- 230: rule base
- 232: valuation object
- 400: data processing system
- 402: application program
- 404: evaluation module
- 406: data object
- 408: return value
- 410: processor
- 412: storage
- 414: graphical user interface
- 416: program module
- 418: program module
- 420: program module
- 422: program module
- 424: program module
- 426: database
- 428: table
- 432: valuation object
- 434: program module

## Claims

1. A data processing system comprising:
- means (216; 416) for receiving a first data object (206; 406) from an application program (202; 406), the first data object having a plurality of first data fields, each one of the first data fields having a unique field name,
- means (222; 422) for providing a second data object (432) in response to receipt of the first data object, the second data object having a plurality of second data fields, each one of the second data fields having one of the unique field names,
- means (226; 426) for storing a plurality of data processing functions,
- means (224; 424) for transferring data from the first data fields having unique field names to the second data fields having identical unique field names,
- means (228; 428) for storing the unique field names of the second data object and for defining a sub-set of the second data fields, wherein data in the sub-set of the second data fields is used for selecting one of a plurality of data processing functions stored by the data processing system,
- means (218; 418, 434) for selecting one of the plurality of data processing functions on the basis of the data that has been transferred to the sub-set of the second data fields,
- means (220; 420) for executing a selected one of the data processing functions using the data of the second data object as input and using an output of the selected data processing function to provide a return value (208; 408) for the application program.

2. The data processing system of claim 1, wherein the plurality of data processing functions are stored in a relational database, wherein the second data fields belonging to the sub-set are key fields of the relational database, and wherein the selection of one of the plurality of data processing functions is performed by querying the relational database by means of the data that has been transferred to the key fields.

3. The data processing system of claims 1 or 2, further comprising a rule base for selecting one of the plurality of the data processing functions by applying one or more of the rules stored in the rule base to the data that has been transferred to the sub-set of the second data fields.

4. The data processing system of claim 1, 2 or 3, further comprising at least one graphical user interface (214; 414) for editing at least one of the unique field names and the data processing functions.

5. The data processing system of any one of the preceding claims 1 to 4, further comprising a plurality of application programs for sending a plurality of data objects to the means for providing a second data object, each one of the data objects of the plurality application programs having data fields with the unique field names.

6. A data processing method for providing a return value to an application program (202; 416), the data processing method comprising the steps of:
- storing unique field names of a second data object (432) in a data processing system (100) for defining a sub-set of second data fields,
- storing a plurality of data processing functions in the data processing system,
- receiving a first data object (206; 406) from the application program, the first data object having a plurality of first data fields, each one of the first data fields having a unique field name,
- generating the second data object in response to receipt of the first data object, the second data object having a number of second data fields corresponding to the unique field names stored in the data processing system,
- transferring data from the first data fields having unique field names to the second data fields having identical unique field names,
- selecting one of the plurality of data processing functions on the basis of data that has been transferred to the sub-set of the second data fields,
- executing a selected one of the data processing functions using the data of the second data object as input and using an output of the selected data processing function to provide a return value (208; 408) for the application program.

7. The data processing method of claim 6, wherein the second data fields having field names belonging to the sub-set are key fields of a relational database, wherein the plurality of data processing functions is stored in the relational database (426), and wherein the selection of one of the plurality of data processing functions is performed by querying the relational database using the data of the key fields.

8. The method of claim 6 or 7, further comprising providing a rule base (230), and applying one or more rules of the rule base to the data that has been transferred to second data fields for selecting one of the plurality of data processing functions.

9. The data processing method of claims 6, 7 or 8, further comprising editing at least one of the unique field names, the data processing functions and the rule base by means of a graphical user interface (414).

10. The method of any one of the preceding claims 6 to 9, further comprising providing a plurality of application programs (102) for sending of first data objects to the data processing system, each one of the first data objects having first data fields having the unique field names.

11. A computer program product for providing a return value (208; 408) to an application program (102) for execution by a data processing system (100) having means (228; 428) for storing unique field names of a second data object (432) and for defining a sub-set of second data fields, wherein data in the sub-set is used for selecting one of a plurality of data processing functions stored by the data processing system, and means (226; 426) for storing a plurality of data processing functions, the computer program product comprising instructions for:
- receiving a first data object (206; 406) from the application program, the first data object having a plurality of first data fields, each one of the first data fields having one of the unique field names, and having further data fields having other field names,
- providing the second data object in response to receipt of the first data object, the second data object having a plurality of second data fields, each one of the second data fields having one of the unique field names,
- transferring data from the first data fields having unique field names to the second data fields having identical unique field names,
- selecting one of the plurality of data processing functions on the basis of data that has been transferred to the sub-set of the second data fields,
- executing a selected one of the data processing functions using the data of the second data object as input and using an output of the selected data processing function to provide the return value to the application program.

12. The computer program product of claim 11, wherein the second data fields having field names belonging to the sub-set are key fields of a relational database (426), wherein the plurality of data processing functions is stored in the relational database, and wherein the selection of one of the plurality of data processing functions is performed by querying the relational database using the data of the key fields.

13. The computer program product of claim 11 or 12, the data processing system further comprising providing a rule base (230), and the computer program product further comprising instructions for applying one or more rules of the rule base to the data that has been transferred to the sub-set of second data fields for selecting one of the plurality of data processing functions.

14. The computer program product of claims 11, 12 or 13, further comprising instructions for editing at least one of the unique field names, the data processing functions and the rule base by means of a graphical user interface (414).

15. The computer program product of any one of the preceding claims 11 to 14, further comprising providing a plurality of application programs (102) for sending of first data objects to the data processing system, each one of the first data objects having first data fields having the unique field names.

## Patentansprüche

1. Datenverarbeitungssystem umfassend:
- Mittel (216, 416) zum Empfang eines ersten Datenobjekts (206; 406) von einem Anwendungsprogramm (202; 406), wobei das erste Datenobjekt eine Vielzahl von ersten Datenfeldern aufweist, wobei jedes der ersten Datenfelder einen eindeutigen Feldnamen aufweist,
- Mittel (222, 422), um ein zweites Datenobjekt (432) als Antwort zum Empfang des ersten Datenobjekts zur Verfügung zu stellen, wobei das zweite Datenobjekt eine Vielzahl von zweiten Datenfeldern aufweist, wobei jedes der zweiten Datenfelder einen der eindeutigen Feldnamen aufweist,
- Mittel (226, 426) zum Speichern einer Vielzahl von Datenverarbeitungsfunktionen,
- Mittel (224, 424) zur Übertragung von Daten von den ersten Datenfeldern, welche eindeutige Feldnamen aufweisen, zu den zweiten Datenfeldern, welche identische eindeutige Feldnamen aufweisen,
- Mittel (228, 428) zur Speicherung der eindeutigen Feldnamen des zweiten Datenobjekts und zur Definierung einer Untergruppe der zweiten Datenfelder, wobei Daten in der Untergruppe der zweiten Datenfelder für die Selektion eine der Vielzahl von Datenverarbeitungsfunktionen, welche durch das Datenverarbeitungssystem gespeichert werden, verwendet werden,
- Mittel (218, 418, 434) zur Auswahl einer der Vielzahl der Datenverarbeitungsfunktionen auf Basis der Daten, welche zu der Untergruppe der zweiten Datenfelder übertragen wurden,
- Mittel (220, 420) zur Ausführung einer der Datenverarbeitungsfunktionen unter Verwendung der Daten des zweiten Datenobjekts als Eingabe und unter Verwendung einer Ausgabe der ausgewählten Datenverarbeitungsfunktion, um einen Rückgabewert (208, 408) dem Anwendungsprogramm zur Verfügung zu stellen.

2. Datenverarbeitungssystem nach Anspruch 1, wobei die Vielzahl der Datenverarbeitungsfunktionen in einer relationalen Datenbank gespeichert sind, wobei die zweiten Datenfelder, welche zu den Untergruppen gehören, Schlüsselfelder der relationalen Datenbank sind, und wobei die Auswahl von einer der Vielzahl von Datenverarbeitungsfunktionen durchgeführt wird, indem die relationale Datenbank mit Mitteln der Daten, welche zu den Schlüsselfeldern übertragen wurden, abgefragt wird.

3. Datenverarbeitungssystem nach Anspruch 1 oder 2, weiter umfassend eine Datenbankvorschrift zur Auswahl einer aus der Vielzahl der Datenverarbeitungsfunktionen durch Anwendung einer oder mehrerer der in der Datenbankvorschrift gespeicherten Regeln auf die Daten, welche zu der Untergruppe der zweiten Datenfelder übertragen wurden.

4. Datenverarbeitungssystem nach Anspruch 1, 2 oder 3, weiter umfassend zumindest eine grafische Benutzeroberfläche (214, 414) zur Bearbeitung von zumindest einem der eindeutigen Feldnamen und der Datenverarbeitungsfunktionen.

5. Datenverarbeitungssystem nach einem der vorigen Ansprüche 1 bis 4, weiter umfassend eine Vielzahl von Anwendungsprogrammen, um eine Vielzahl von Datenobjekten zu den Mitteln zur Bereitstellung eines zweiten Datenobjekts zu übertragen, wobei jedes der Datenobjekte der Vielzahl von Anwendungsprogrammen Datenfelder mit den eindeutigen Feldnamen aufweist.

6. Datenverarbeitungsverfahren zur Bereitstellung eines Rückgabewerts an ein Anwendungsprogramm (202, 416), wobei das Datenverarbeitungsverfahren folgende Schritte umfasst:
- Speicherung eindeutiger Feldnamen eines zweiten Datenobjekts (432) in einem Datenverarbeitungssystem (100) zur Definition einer Untergruppe von zweiten Datenfeldern,
- Speichern einer Vielzahl von Datenverarbeitungsfunktionen in dem Datenverarbeitungssystem,
- Empfang eines ersten Datenobjekts (206, 406) von dem Anwendungsprogramm, wobei das erste Datenobjekt eine Vielzahl von ersten Datenfeldern aufweist, wobei jedes der ersten Datenfelder einen eindeutigen Feldnamen aufweist,
- Erzeugung des zweiten Datenobjekts als Antwort auf den Empfang des ersten Datenobjekts, wobei das zweite Datenobjekt eine Anzahl von zweiten Datenfeldern aufweist, welche den eindeutigen Feldnamen, welche in dem Datenverarbeitungssystem gespeichert sind, entsprechen,
- Datenübertragung von den ersten Datenfeldern, welche eindeutige Feldnamen aufweisen, zu den zweiten Datenfeldern, welche identische eindeutige Feldnamen aufweisen,
- Auswahl von einer der Vielzahl von Datenverarbeitungsfunktionen auf Basis der Daten, welche zu der Untergruppe der zweiten Datenfelder übertragen wurden,
- Ausführung einer aus den Datenverarbeitungsfunktionen ausgewählten Datenverarbeitungsfunktion unter Verwendung der Daten des zweiten Datenobjekts als Eingabe und unter Verwendung einer Ausgabe der ausgewählten Datenverarbeitungsfunktion zur Bereitstellung eines Rückgabewerts (208, 408) für das Anwendungsprogramm.

7. Datenverarbeitungsverfahren nach Anspruch 6, wobei die zweiten Datenfelder, welche Feldnamen aufweisen, welche zu der Untergruppe gehören, Schlüsselfelder einer relationalen Datenbank sind, wobei die Vielzahl von Datenverarbeitungsfunktionen in der relationalen Datenbank (426) gespeichert sind, und wobei die Auswahl einer der Vielzahl von Datenverarbeitungsfunktionen durchgeführt wird, indem die relationale Datenbank unter Verwendung der Daten der Schlüsselfelder abgefragt wird.

8. Verfahren nach Anspruch 6 oder 7, des Weiteren umfassend eine Datenbankvorschrift (230), und Anwendung einer oder mehrerer Regeln der Datenbankvorschrift auf Daten, welche zu den zweiten Datenfeldern übertragen wurden, um eine aus der Vielzahl von Datenverarbeitungsfunktionen auszuwählen.

9. Datenverarbeitungsverfahren nach Anspruch 6, 7 oder 8, weiter umfassend Bearbeitung von zumindest einem der eindeutigen Feldnamen, der Datenverarbeitungsfunktionen und der Datenbankvorschrift mit Mitteln einer grafischen Benutzeroberfläche (414).

10. Verfahren nach einem der vorigen Ansprüche 6 bis 9, weiter umfassend Bereitstellung einer Vielzahl von Anwendungsprogrammen (102) zur Übertragung von ersten Datenobjekten zu dem Datenverarbeitungssystem, wobei jedes der ersten Datenobjekte erste Datenfelder mit den eindeutigen Feldnamen aufweist.

11. Computerprogrammprodukt zur Bereitstellung eines Rückgabewerts (208, 408) an ein Anwendungsprogramm (102) zur Ausführung durch ein Datenverarbeitungssystem (100) mit Mitteln (228, 428) zur Speicherung von eindeutigen Feldnamen eines zweiten Datenobjekts (432) und zur Definition einer Untergruppe von zweiten Datenfeldern, wobei Daten in der Untergruppe verwendet werden, um eine aus einer Vielzahl von Datenverarbeitungsfunktionen auszuwählen, welche durch das Datenverarbeitungssystem gespeichert sind, und Mitteln (226, 426) zur Speicherung einer Vielzahl von Datenverarbeitungsfunktionen, das Computerprogrammprodukt umfassend Anweisungen für:
- Empfang eines ersten Datenobjekts (206, 406) von dem Anwendungsprogramm, wobei das erste Datenobjekt eine Vielzahl von ersten Datenfeldern aufweist, wobei jedes der ersten Datenfelder einen der eindeutigen Feldnamen trägt und weitere Datenfelder mit anderen Feldnamen aufweist,
- Bereitstellung des zweiten Datenobjekts als Antwort auf den Empfang des ersten Datenobjekts, wobei das zweite Datenobjekt eine Vielzahl von zweiten Datenfeldern aufweist, wobei jedes der zweiten Datenfelder einen der eindeutigen Feldnamen trägt,
- Datenübertragung von den ersten Datenfeldern mit eindeutigen Feldnamen zu den zweiten Datenfeldern mit identischen eindeutigen Feldnamen,
- Auswahl einer der Vielzahl von Datenverarbeitungsfunktionen auf der Basis von Daten, welche zu der Untergruppe der zweiten Datenfelder übertragen wurden,
- Ausführung einer der ausgewählten Datenverarbeitungsfunktionen unter Verwendung der Daten des zweiten Datenobjekts als Eingabe und unter Verwendung einer Ausgabe der ausgewählten Datenverarbeitungsfunktion zur Bereitstellung des Rückgabewerts an das Anwendungsprogramm.

12. Computerprogrammprodukt nach Anspruch 11, wobei die zweiten Datenfelder, welche Feldnamen aufweisen, welche zu der Untergruppe gehören, Schlüsselfelder einer relationalen Datenbank sind (426), wobei die Vielzahl der Datenverarbeitungsfunktionen in der relationalen Datenbank gespeichert sind, und wobei die Auswahl von einer aus der Vielzahl von Datenverarbeitungsfunktionen durchgeführt wird, indem die relationale Datenbank unter Verwendung der Daten der Schlüsselfelder abgefragt wird.

13. Computerprogrammprodukt nach Anspruch 11 oder 12, wobei das Datenverarbeitungssystem weiter eine Datenbankvorschrift (230) umfasst und das Computerprogrammprodukt weiter Anweisungen zur Anwendung einer oder mehrerer Regeln der Datenbankvorschrift auf die Daten umfasst, welche zu der Untergruppe des zweiten Datenfeldes zur Auswahl einer der Vielzahl der Datenverarbeitungsfunktionen übertragen wurden.

14. Computerprogrammprodukt nach Anspruch 11, 12 oder 13, weiter umfassend Anweisungen zur Bearbeitung von zumindest einem der eindeutigen Feldnamen, der Datenverarbeitungsfunktionen und der Datenbankvorschrift mit Mitteln einer grafischen Benutzeroberfläche (414).

15. Computerprogrammprodukt nach einem der vorigen Ansprüche 11 bis 14, weiter umfassend eine Bereitstellung einer Vielzahl von Anwendungsprogrammen (102) zur Übermittlung eines ersten Datenobjekts an das Datenverarbeitungssystem, wobei jedes der ersten Datenobjekte, welches Datenfelder aufweist, eindeutige Feldnamen trägt.

## Revendications

1. Système de traitement de données comprenant:
- des moyens (216 ; 416) pour recevoir un premier objet de données (206 ; 406) en provenance d'un programme d'application (202 ; 406), le premier objet de données ayant une pluralité de premiers champs de données, chacun des premiers champs de données ayant un nom de champ unique,
- des moyens (222 ; 422) pour fournir un second objet de données (432) en réponse à la réception du premier objet de données, le second objet de données ayant une pluralité de seconds champs de données, chacun des seconds champs de données ayant un des noms de champ uniques,
- des moyens (226 ; 426) pour stocker une pluralité de fonctions de traitement de données,
- des moyens (224 ; 424) pour transférer des données des premiers champs de données ayant des noms de champ uniques aux seconds champs de données ayant des noms de champ uniques identiques,
- des moyens (228 ; 428) pour stocker les noms de champ uniques du second objet de données et pour définir un sous-ensemble des seconds champs de données, où des données dans le sous-ensemble des seconds champs de données sont utilisées pour sélectionner une fonction parmi une pluralité de fonctions de traitement de données stockées par le système de traitement de données,
- des moyens (218; 418, 434) pour sélectionner une fonction parmi la pluralité de fonctions de traitement de données sur la base des données qui ont été transférées au sous-ensemble des seconds champs de données,
- des moyens (220; 420) pour exécuter une fonction sélectionnée parmi les fonctions de traitement de données en utilisant les données du second objet de données comme entrée et en utilisant une sortie de la fonction de traitement de données sélectionnée pour fournir une valeur de retour (208 ; 408) pour le programme d'application.

2. Système de traitement de données selon la revendication 1, dans lequel la pluralité de fonctions de traitement de données sont stockées dans une base de données relationnelle, dans lequel les seconds champs de données appartenant au sous-ensemble sont des champs clés de la base de données relationnelle, et dans lequel la sélection d'une fonction parmi la pluralité de fonctions de traitement de données est effectuée en interrogeant la base de données relationnelle au moyen des données qui ont été transférées aux champs clés.

3. Système de traitement de données selon la revendication 1 ou 2, comprenant en outre une base de règles pour sélectionner une fonction parmi la pluralité des fonctions de traitement de données en appliquant une ou plusieurs des règles stockées dans la base de règles aux données qui ont été transférées au sous-ensemble des seconds champs de données.

4. Système de traitement de données selon la revendication 1, 2 ou 3, comprenant en outre au moins une interface utilisateur graphique (214 ; 414) pour éditer au moins un parmi les noms de champ uniques et les fonctions de traitement de données.

5. Système de traitement de données selon l'une quelconque des revendications 1 à 4 précédentes, comprenant en outre une pluralité de programmes d'application pour envoyer une pluralité d'objets de données aux moyens pour fournir un second objet de données, chacun des objets de données de la pluralité de programmes d'application ayant des champs de données avec les noms de champ uniques.

6. Procédé de traitement de données pour fournir une valeur de retour à un programme d'application (202 ; 416), le procédé de traitement de données comprenant les étapes consistant à :
- stocker des noms de champ uniques d'un second objet de données (432) dans un système de traitement de données (100) pour définir un sous-ensemble de seconds champs de données,
- stocker une pluralité de fonctions de traitement de données dans le système de traitement de données,
- recevoir un premier objet de données (206 ; 406) en provenance du programme d'application, le premier objet de données ayant une pluralité de premiers champs de données, chacun des premiers champs de données ayant un nom de champ unique,
- générer le second objet de données en réponse à la réception du premier objet de données, le second objet de données ayant un nombre de seconds champs de données correspondant aux noms de champ uniques stockés dans le système de traitement de données,
- transférer des données des premiers champs de données ayant des noms de champ uniques aux seconds champs de données ayant des noms de champ uniques identiques,
- sélectionner une fonction parmi la pluralité de fonctions de traitement de données sur la base de données qui ont été transférées au sous-ensemble des seconds champs de données,
- exécuter une fonction sélectionnée parmi les fonctions de traitement de données en utilisant les données du second objet de données comme entrée et en utilisant une sortie de la fonction de traitement de données sélectionnée pour fournir une valeur de retour (208 ; 408) pour le programme d'application.

7. Procédé de traitement de données selon la revendication 6, dans lequel les seconds champs de données ayant des noms de champ appartenant au sous-ensemble sont des champs clés d'une base de données relationnelle, dans lequel la pluralité de fonctions de traitement de données est stockée dans la base de données relationnelle (426), et dans lequel la sélection d'une fonction parmi la pluralité de fonctions de traitement de données est effectuée en interrogeant la base de données relationnelle en utilisant les données des champs clés.

8. Procédé selon la revendication 6 ou 7, comprenant en outre la fourniture d'une base de règles (230), et l'application d'une ou plusieurs règles de la base de règles aux données qui ont été transférées aux seconds champs de données pour sélectionner une fonction parmi la pluralité de fonctions de traitement de données.

9. Procédé de traitement de données selon la revendication 6, 7 ou 8, comprenant en outre l'édition d'au moins un parmi les noms de champ uniques, les fonctions de traitement de données et la base de règles au moyen d'une interface utilisateur graphique (414).

10. Procédé selon l'une quelconque des revendications 6 à 9 précédentes, comprenant en outre la fourniture d'une pluralité de programmes d'application (102) pour l'envoi de premiers objets de données au système de traitement de données, chacun des premiers objets de données ayant des premiers champs de données ayant les noms de champ uniques.

11. Produit de programme informatique pour fournir une valeur de retour (208 ; 408) à un programme d'application (102) pour l'exécution par un système de traitement de données (100) ayant des moyens (228 ; 428) pour stocker des noms de champ uniques d'un second objet de données (432) et pour définir un sous-ensemble de seconds champs de données, dans lequel des données dans le sous-ensemble sont utilisées pour sélectionner une fonction parmi une pluralité de fonctions de traitement de données stockées par le système de traitement de données, et des moyens (226 ; 426) pour stocker une pluralité de fonctions de traitement de données, le produit de programme informatique comprenant des instructions pour:
- recevoir un premier objet de données (206 ; 406) en provenance du programme d'application, le premier objet de données ayant une pluralité de premiers champs de données, chacun des premiers champs de données ayant un des noms de champ uniques, et ayant des champs de données supplémentaires ayant d'autres noms de champ,
- fournir le second objet de données en réponse à la réception du premier objet de données, le second objet de données ayant un nombre de seconds champs de données, chacun des seconds champs de données ayant un des noms de champ uniques,
- transférer des données des premiers champs de données ayant des noms de champ uniques aux seconds champs de données ayant des noms de champ uniques identiques,
- sélectionner une de la pluralité de fonctions de traitement de données sur la base de données qui ont été transférées au sous-ensemble des seconds champs de données,
- exécuter une fonction sélectionnée parmi les fonctions de traitement de données en utilisant les données du second objet de données comme entrée et en utilisant une sortie de la fonction de traitement de données sélectionnée pour fournir la valeur de retour au programme d'application.

12. Produit de programme informatique selon la revendication 11, dans lequel les seconds champs de données ayant des noms de champ appartenant au sous-ensemble sont des champs clés d'une base de données relationnelle (426), dans lequel la pluralité de fonctions de traitement de données est stockée dans la base de données relationnelle, et dans lequel la sélection d'une fonction parmi la pluralité de fonctions de traitement de données est effectuée en interrogeant la base de données relationnelle en utilisant les données des champs clés.

13. Produit de programme informatique selon la revendication 11 ou 12, le système de traitement de données comprenant en outre la fourniture d'une base de règles (230), et le produit de programme informatique comprenant en outre des instructions pour appliquer une ou plusieurs règles de la base de règles aux données qui ont été transférées au sous-ensemble de seconds champs de données pour sélectionner une fonction parmi la pluralité de fonctions de traitement de données.

14. Produit de programme informatique selon la revendication 11, 12 ou 13, comprenant en outre des instructions pour éditer au moins un parmi les noms de champ uniques, les fonctions de traitement de données et la base de règles au moyen d'une interface utilisateur graphique (414).

15. Produit de programme informatique selon l'une quelconque des revendications 11 à 14 précédentes, comprenant en outre la fourniture d'une pluralité de programmes d'application (102) pour l'envoi de premiers objets de données au système de traitement de données, chacun des premiers objets de données ayant des premiers champs de données ayant les noms de champ uniques.
